# EUROPEAN PATENT APPLICATION

(11) **EP 2 947 579 A1**
(43) Date of publication of application: **25.11.2015**
(21) Application number: 14169543.7
(22) Date of filing: 22.05.2014
(51) Int. Cl.: G06F 17/30, H04L 29/08, G06F 11/14

(54) **Method for generating a backup copy of a distributed data structure, system for generating a backup copy of a distributed data structure, program and computer program product**

(71) Applicant: Deutsche Telekom AG, 53113 Bonn (DE)
(72) Inventor: Schatzmayr, Rainer, 53229 Bonn (DE)
(74) Representative: Schwöbel, Thilo K.

(57) **Abstract**

The invention relates to a method for generating a backup copy of a distributed data structure, wherein the distributed data structure is stored on first network nodes of a computer network, wherein the method comprises the steps of:
-- adding second network nodes to the computer network and/or adding copies of the distributed data structure to the computer network,
-- distributing the distributed data structures over the computer network such that backup information for generating the backup copy of the distributed data structure is stored on third network nodes of the computer network,
-- decoupling the third network nodes from the computer network.

## Description

### BACKGROUND

The present invention relates to a method for generating a backup copy of a distributed data structure.

Furthermore, the present invention relates to a system for generating a backup copy of a distributed data structure.

Additionally, the present invention relates to a program and to a computer program product for generating a backup copy of a distributed data structure.

Typically, distributed data structures are used in a computer network to store data items of the distributed data structure in a distributed manner, wherein the data items are distributed over network nodes of the computer network. The kind of data structure being used for a specific application may be specialized to specific tasks. For example, a tree data structure may be well-suited for an implementation of a database, while a compiler implementation may use hash tables to look up identifiers. Accordingly, other data structures may be used as well.

The computer network usually comprises a control network element being configured to execute specific management tasks. For example, the control network element may be responsible to ensure data consistency, data distribution and data replication of the content of the distributed data structure stored in the computer network. The control network element may further handle situations such as network nodes joining or leaving the computer network.

However, the generation of a snapshot (backup) copy of the content of a distributed data structure typically is a challenging task. For example, the creation of a backup copy of the distributed data structure may include sending a token from the control network element to the network nodes of the computer network. The token may be used to synchronize backup processes being executed on the network nodes. For example, a specific point in time may be specified by the control network element such that all network nodes may send a copy of the content stored on the respective nodes to a central network element of the computer network. However, this might lead to situations where the load created on the central network element (that suddenly receives a huge amount of data from all the network nodes) limits the performance of the computer network and/or accuracy of the backup data. Furthermore, the network nodes may require a relatively complex functionality in order to enable the network nodes to handle the storage as well as all the processes involved with the generation of snapshots.

### SUMMARY

An object of the present invention is to provide a technically simple and efficient solution for making a backup copy of a distributed data structure, which is stored in a computer network, such that data consistency is guaranteed especially on each network node of the computer network.

The object of the present invention is achieved by a method for generating a backup copy of a distributed data structure, wherein the distributed data structure is stored on first network nodes of a computer network, wherein the method comprises the steps of:
-- adding second network nodes to the computer network and/or adding copies of the distributed data structure to the computer network,
-- distributing the distributed data structures over the computer network such that backup information for generating the backup copy of the distributed data structure is stored on third network nodes of the computer network,
-- decoupling the third network nodes from the computer network.

It is thereby advantageously possible to provide a method for making a snapshot of the distributed data structure, in particular a distributed hash table (DHT), such that a technically simple and efficient mechanism is realized. In particular, the amount and complexity of computing resources and/or technical efforts for creating historical snapshots (backup copies) of the distributed data structure are reduced with respect to the state of the art. The backup copy is preferably used to search errors and/or make clones of the distributed data structure. It is furthermore advantageously possible to ensure data consistency of the data items - which are stored in the distributed data structure - on each network node of the computer network. Preferably, a decentralized solution is realized by the inventive method, wherein the load or network traffic is distributed over the computer network more efficiently as compared to the state of the art.

According to a preferred embodiment of the present invention, the distributed data structure is a data structure comprising a plurality of data items (or tuple elements or key-value pairs) being distributed over the computer network. In particular, the data items are initially (i.e. before performing the steps of the method) distributed over the first network nodes of the computer network. Preferably, storing the distributed data structure on the first network nodes of the computer network comprises storing the plurality of data items on the first network nodes of the computer network in a distributed manner - for example according to specific key ranges. In particular, the distributed data structure is redundantly stored on the first network means - i.e. redundant copies of the distributed data structure are stored on the first network nodes.

According to a preferred embodiment of the present invention, second network nodes are added (connected) to the computer network such that the second network nodes can be used - in addition to the first network nodes - for storing the distributed data structure and the redundant copies of the distributed data structure. Alternatively or additionally, redundant copies of the distributed data structure are added to the computer network - for example by replicating the distributed data structure on the first and second network nodes of the computer network. For example, the backup copy of the distributed data structure may also be generated, if only the redundancy is increased, but no second network nodes are added to the computer network. However, it is preferred according to the present invention that at least one second network node is added to the computer network and that at least one copy of the distributed data structure is added to the computer network upon addition of the at least one second network node. Thereby, it is advantageously possible to generate the backup copy in an optimized way with regard to other solutions.

According to a preferred embodiment of the present invention, distributing the distributed data structures over the computer network includes partitioning of each distributed data structure of the distributed data structures such that a subset (e.g. key-value pairs of a specific key range) of each distributed data structure is stored on a different node. Preferably, the distributed data structures comprise not only the distributed data structure, but also the redundant copies of the distributed data structure. According to the present invention, the redundant copies of the distributed data structure and the distributed data structure are preferably indistinguishable. Preferably, the distributed data structures are distributed over the computer network such that backup information for generating the backup copy of the distributed data structure is stored on third network nodes of the computer network. This means, in particular, that the backup information comprises all information about one or more complete copy (i.e. all key-value pairs or data items) of one distributed data structure (for example a distributed hash table) at a specific moment in time and/or a specific transaction level. Preferably, the third network nodes are subsequently decoupled (removed or disconnected) from the computer network.

According to a preferred embodiment of the present invention, the method comprises the further step of:
-- storing the distributed data structure in form of a distributed hash table (DHT) in the computer network, wherein a plurality of distributed key-value pairs of the distributed hash table are preferably distributed over the computer network.

Thereby, it is advantageously possible to use the distributed data structure, for example, in distributed files systems, web caching and peer to peer networks. The computer network is preferably an overlay network, more preferably a distributed hash table (DHT) overlay network. Preferably, a telecommunications network comprises the distributed hash table (DHT) overlay network, wherein the distributed hash table (DHT) is used to store data of an Operating Support System (OSS) of the telecommunications network.

According to a further preferred embodiment of the present invention, a rebalancing step is performed by the computer network, wherein, in the rebalancing step, the distributed data structures are distributed over the computer network, wherein the third network nodes are decoupled from the computer network after a completion of the rebalancing step.

Thereby, it is advantageously possible to generate a backup copy of the distributed data structure, in particular a distributed hash table (DHT), in a relatively simple and efficient manner by exploiting the rebalancing step being executed by the computer network, in particular a DHT network, upon addition of the second nodes, wherein preferably the DHT is automatically stabilized in the rebalancing step. Preferably, the rebalancing step is performed upon addition of the second network nodes to the computer network, wherein the third nodes - having the information stored in the distributed data structure - are decoupled from the computer network subsequent to completion of the rebalancing step.

According to a further preferred embodiment of the present invention, the copies of the distributed data structure are added to the computer network subsequent to adding the second network nodes to the computer network.

Thereby, it is advantageously possible to increase the number of copies (redundancy) of the distributed data structure during execution of the rebalancing step. It is thereby furthermore advantageously possible that the number of copies is determined by the computer network during execution of the rebalancing step.

According to a further preferred embodiment of the present invention, a number of the second network nodes added to the computer network and/or a number of the copies of the distributed data structure added to the computer network is/are determined depending on a number of the first network nodes and/or depending on an initial number of copies of the distributed data structure stored in the computer network.

Thereby, it is advantageously possible to optimize the method with regard to time and/or computation effort and/or number of second network nodes being used for generating the backup copy of the distributed data structure.

According to a further preferred embodiment of the present invention, a number of the third network nodes decoupled from the computer network is equal to the number of the second network nodes added to the computer network.

Thereby, it is advantageously possible to use either the same or different network nodes for the second and third network nodes. Preferably, by using the same amount of nodes for the insertion and decoupling, an optimized amount of nodes may be used in both cases. Preferably, the amount of second and third nodes and/or the insertion points of the second nodes and/or the third network nodes are determined such that a copy of all information stored in the distributed data structure exists on the third nodes.

According to a further preferred embodiment of the present invention, the backup information stored on the third network nodes is configured such that the backup copy of the distributed data structure generated from the backup information is related to a specific moment in time and/or a specific transaction level.

Thereby, it is advantageously possible to generate the backup copy (snapshot) of the distributed data structure such that data consistency is ensured on the computer network, especially when the distributed data structure is periodically updated.

According to a further preferred embodiment of the present invention, the backup copy of the distributed data structure is generated from the backup information stored on the third network nodes subsequent to decoupling the third network nodes from the computer network.

Thereby, it is advantageously possible to use the backup copy for error searches and/or creation of clones of the distributed data structure and/or analysis of the distributed data structure.

Furthermore, the present invention relates to system for generating a backup copy of a distributed data structure, wherein the system comprises a computer network having first network nodes, wherein the distributed data structure is stored on the first network nodes of the computer network, wherein the system is configured to add second network nodes to the computer network and/or wherein the system is configured to add copies of the distributed data structure to the computer network, wherein the system is configured to distribute the distributed data structures over the computer network such that backup information for generating the backup copy of the distributed data structure is stored on third network nodes of the computer network, wherein the system is configured to decouple the third network nodes from the computer network.

It is thereby advantageously possible to a system for making a snapshot of the distributed data structure, in particular a distributed hash table (DHT), such that a technically simple and efficient mechanism is realized. In particular, the amount and complexity of computing resources (e.g. network nodes of the system) and/or technical efforts for creating historical snapshots (backup copies) of the distributed data structure are reduced with respect to the state of the art. Preferably, a decentralized solution is realized by the inventive system, wherein the load or network traffic is distributed over the computer network more efficiently as compared to the state of the art.

According to a preferred embodiment - in particular of the system - of the present invention, the distributed data structure is a distributed hash table (DHT), wherein a plurality of key-value pairs of the distributed hash table (DHT) are preferably distributed over the computer network.

Thereby, it is advantageously possible to use the distributed data structure, for example, in distributed files systems, web caching and peer to peer networks. The computer network is preferably an overlay network, more preferably a distributed hash table (DHT) overlay network. Preferably, the system comprises a telecommunications network, which includes the distributed hash table (DHT) overlay network, wherein the distributed hash table (DHT) is used to store data of an Operating Support System (OSS) of the telecommunications network.

According to a preferred embodiment - in particular of the system - of the present invention, the system is configured to generate the backup copy of the distributed data structure from the backup information stored on the third network nodes.

Thereby, it is advantageously possible to provide the backup copy for error searches and/or creation of clones of the distributed data structure and/or analysis of the distributed data structure.

Additionally, the present invention relates to a program comprising a computer readable program code which, when executed on a computer or on a system according to the present invention, causes the computer or the system to perform a method according to the present invention.

Still additionally, the present invention relates to a computer program product for using a computer or a system according to the present invention, the computer program product comprising a computer program stored on a storage medium, the computer program comprising program code which, when executed on a computer or on the system, causes the computer or the system to perform a method according the present invention.

According to a preferred embodiment of the present invention, the program is a distributed program and/or the computer program of the computer program product is a distributed computer program. Preferably, the program and/or the computer program is/are executed on the computer network, more preferably on one or more network nodes of the computer network, of a system according to the present invention.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

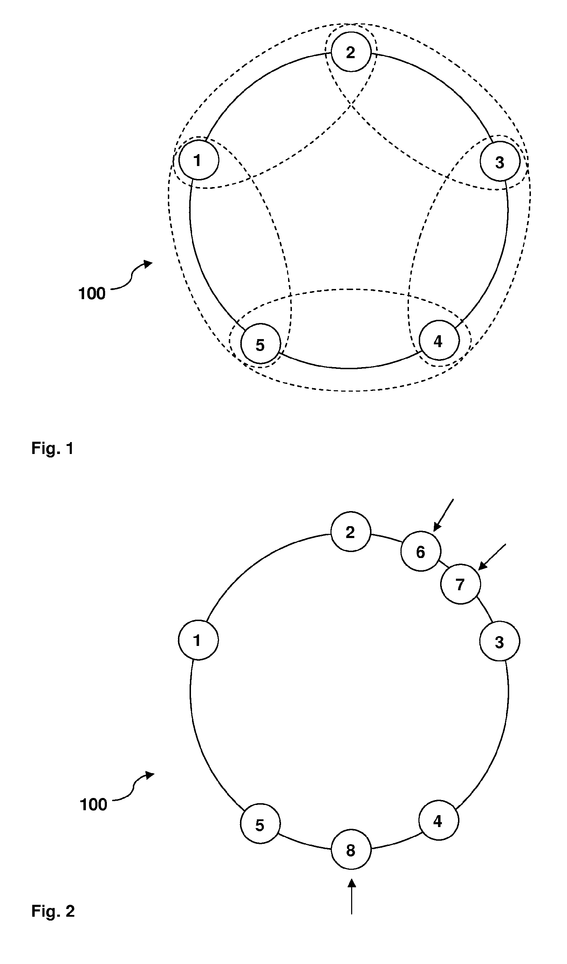

Figures 1 to 5 schematically illustrate a method and a system for generating a backup copy of a distributed data structure according to the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figures 1 to 5, a method and a system for generating a backup copy of a distributed data structure according to the present invention is illustrated schematically, wherein the system comprises a computer network 100. According to a preferred embodiment of the present invention, the system is a distributed hash table (DHT) system, wherein the distributed data structure is a distributed hash table (DHT). The distributed hash table (DHT) is thereby used as a storing mechanism based on a key and a value associated with the key (key-value pairs), wherein the key-value pairs are preferably also called data items or tuple elements within the context of the present invention. The distributed hash table (DHT) comprises a plurality of key-value pairs, which are distributed over the computer network 100 (distributed key-value pairs) according to specific key ranges. A key is preferably a calculated index, wherein, for each data element being stored in the computer network 100, the key is calculated based on a hash of the name of the data element. Preferably, the key is a 160 Bit (Binary Digit) string calculated by hashing the name of the element (i.e. applying a hash function to the name) by using a SHA-1 algorithm (Secure Hash Algorithm - SHA-1).

In Figure 1, a computer network 100 of a system according to the present invention is schematically illustrated, wherein the computer network 100 at least comprises first network nodes 1, 2, 3, 4, 5. The distributed data structure is here initially stored on the first network nodes 1, 2, 3, 4, 5. In particular, the plurality of key-value pairs

(tuple elements) of the distributed hash table (DHT) are stored on the first network nodes 1, 2, 3, 4, 5 of the computer network 100. This means, in particular, that the distributed data structure is distributed over the first network nodes 1, 2, 3, 4, 5 of the computer network 100 which participate in the DHT network 100, for example a DHT ring network 100. Preferably, each node of the first network nodes 1, 2, 3, 4, 5 comprises storage means for storing the key-value pairs according to specific key ranges. The key-value pairs are preferably stored in more than one network node of the first network nodes 1, 2, 3, 4, 5 in order to provide relatively high data reliability. For example, the value of the key-value pair comprises a reference to the data element or the data element itself. In Figure 1, the computer network 100 is shown, wherein the computer network 100 initially comprises a number of two copies of the distributed data structure (indicated by dashed lines). For example, the values of all hashed keys between a key A and a key C are stored on a first pair of network nodes 1, 2 of the first network nodes 1, 2, 3, 4, 5 and the values of all hashed keys between a key B and a key D are stored in a second pair of network nodes 2, 3 of the first network nodes 1, 2, 3, 4, 5, wherein the other key-value pairs are distributed over the computer network 100 accordingly.

In Figure 2, a first step of the method according to the present invention is illustrated, wherein the first step comprises adding second network nodes 6, 7, 8 to the computer network 100. For example, the second network nodes 6, 7, 8 (or additional network nodes) are added (or introduced) to the DHT ring network 100. In addition, copies of the distributed data structure are preferably added to the computer network 100 - thereby, in particular, increasing a number of copies of the key-value pairs (value redundancy) of the distributed data structure. Preferably, a number of the second network nodes 6, 7, 8 (amount of nodes to be inserted) added to the computer network 100 is related to a number of copies (redundancy) of each key-value pair stored in the distributed data structure. According to the present invention, the number of second network nodes 6, 7, 8 is preferably determined depending on a ratio of a total number of network nodes 1, 2, 3, 4, 5, 6, 7, 8 (after the insertion of the second network nodes 6, 7, 8) to a number of copies (redundancy) of the distributed data structure (existing in the computer network 100 after the insertion of the second network nodes 6, 7, 8). Preferably, the insertion point of the second network nodes 6, 7, 8 to the computer network 100, is determined by the computer network 100. For example, the insertion points are either predetermined (or fixed) insertion points in the DHT ring network or non-predicted insertion points.

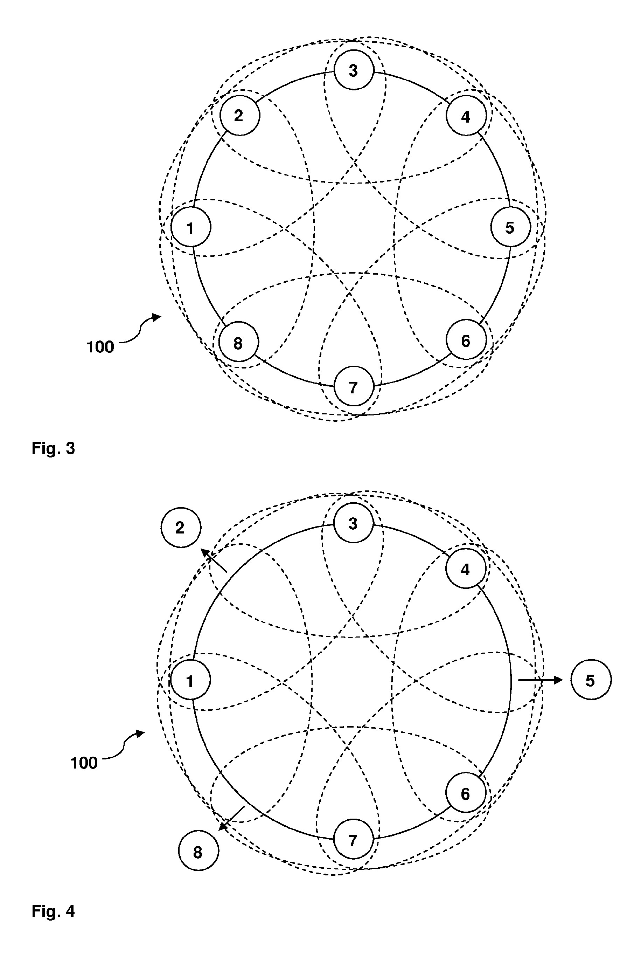

In Figure 3, a second step of the method according to the present invention is illustrated, wherein the second step comprises distributing the distributed data structures over the computer network 100 such that backup information for generating the backup copy of the distributed data structure is stored on third network nodes 2, 5, 8 of the computer network 100. According to a preferred embodiment of the present invention, the computer network 100 (DHT network 100) is configured such that the distributed data structure (distributed hash table - DHT) re-balances itself upon addition or removal of network nodes, wherein preferably the number of copies for each key-value pair stored in the computer network 100 is increased. The DHT is stabilized during a time interval (after a relaxation time) after the insertion of the second nodes 6, 7, 8 such that the distributed data structures (i.e. the DHT and the redundant copies of the DHT) are stored (in a distributed manner) on the first and second network nodes 1, 2, 3, 4, 5, 6, 7, 8. In Figure 3, the topology of the computer network 100 after inserting three second nodes 6, 7, 8 is illustrated, wherein the redundancy is increased to three copies of the DHT (indicated by dashed lines).

In Figure 4, a third step of the method according to the present invention is illustrated, wherein the third step comprises decoupling the third network nodes 2, 5, 8 from the computer network 100. Preferably, the number of third network nodes 2, 5, 8 decoupled in the third step (after the DHT has stabilized in the second step) is selected such that the number of third network nodes 2, 5, 8 is equal to the number of second network nodes 6, 7, 8 inserted in the first step of the method. In particular, the third nodes 2, 5, 8 may be different from the second network nodes 6, 7, 8. Preferably, the third network nodes 2, 5, 8, are selected such that the third network nodes 2, 5, 8 are sufficiently spaced from the first network nodes 1, 2, 3, 4, 5. Preferably, the backup information is configured such that it is advantageously possible to generate a backup copy of all information stored in the DHT depending on the backup information. Preferably, the (selected) third network nodes 2, 5, 8 are decoupled (removed) from the computer network 100 at a specific time or transaction level, wherein the DHT ring network 100 holds a lower number of copies of the DHT.

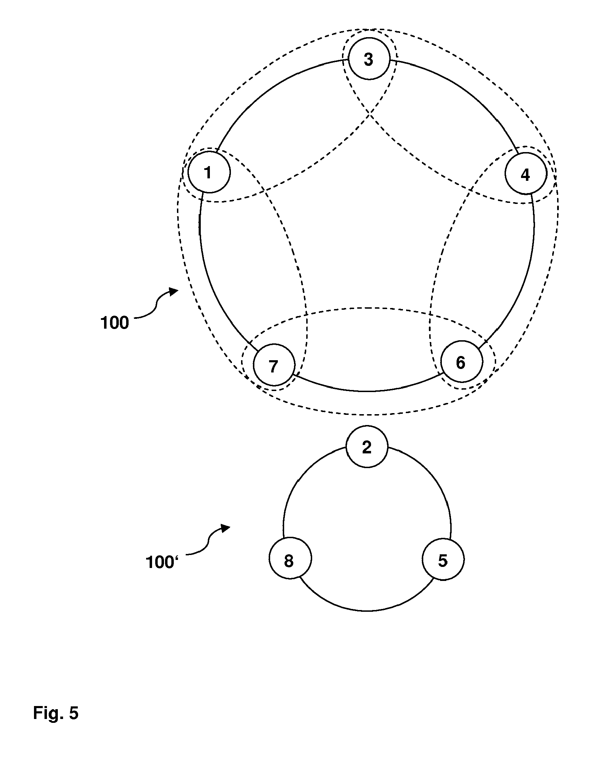

In Figure 5, a fourth step of the method according to the present invention is illustrated, wherein the fourth step comprises creating a clone computer network 100' by using the third network nodes 2, 5, 8 decoupled from the computer network 100 in the third step. Preferably, the clone computer network 100' is created such that the clone computer network 100' has a single copy of all the data stored in the distributed data structure, preferably the DHT, before the third network nodes 2, 5, 8 were decoupled in the third step. Preferably, the (original) DHT network 100 is updated in the fourth step. Preferably, the cloned DHT network 100' is used for creation of backups and/or for testing purposes and/or for error investigation.

## Claims

1. Method for generating a backup copy of a distributed data structure, wherein the distributed data structure is stored on first network nodes (1, 2, 3, 4, 5) of a computer network (100), wherein the method comprises the steps of:
-- adding second network nodes (6, 7, 8) to the computer network (100) and/or adding copies of the distributed data structure to the computer network (100),
-- distributing the distributed data structures over the computer network (100) such that backup information for generating the backup copy of the distributed data structure is stored on third network nodes (2, 5, 8) of the computer network (100),
-- decoupling the third network nodes (2, 5, 8) from the computer network (100).

2. Method according to claim 1, wherein the method comprises the further step of:
-- storing the distributed data structure in form of a distributed hash table (DHT) in the computer network (100), wherein a plurality of distributed key-value pairs of the distributed hash table are preferably distributed over the computer network (100).

3. Method according to one of the preceding claims, wherein a rebalancing step is performed by the computer network (100), wherein, in the rebalancing step, the distributed data structures are distributed over the computer network (100), wherein the third network nodes (2, 5, 8) are decoupled from the computer network (100) after a completion of the rebalancing step.

4. Method according to one of the preceding claims, wherein the copies of the distributed data structure are added to the computer network (100) subsequent to adding the second network nodes (6, 7, 8) to the computer network (100).

5. Method according to one of the preceding claims, wherein a number of the second network nodes (6, 7, 8) added to the computer network (100) and/or a number of the copies of the distributed data structure added to the computer network (100) is/are determined depending on a number of the first network nodes and/or depending on an initial number of copies of the distributed data structure stored in the computer network.

6. Method according to one of the preceding claims, wherein a number of the third network nodes (2, 5, 8) decoupled from the computer network (100) is equal to the number of the second network nodes (2, 5, 8) added to the computer network (100).

7. Method according to one of the preceding claims, wherein the backup information stored on the third network nodes (2, 5, 8) is configured such that the backup copy of the distributed data structure generated from the backup information is related to a specific moment in time and/or a specific transaction level.

8. Method according to one of the preceding claims, wherein the backup copy of the distributed data structure is generated from the backup information stored on the third network nodes (2, 5, 8) subsequent to decoupling the third network nodes (2, 5, 8) from the computer network (100).

9. System for generating a backup copy of a distributed data structure, wherein the system comprises a computer network (100) having first network nodes (1, 2, 3, 4, 5), wherein the distributed data structure is stored on the first network nodes (1, 2, 3, 4, 5) of the computer network (100), wherein the system is configured to add second network nodes (6, 7, 8) to the computer network (100) and/or wherein the system is configured to add copies of the distributed data structure to the computer network (100), wherein the system is configured to distribute the distributed data structures over the computer network (100) such that backup information for generating the backup copy of the distributed data structure is stored on third network nodes (2, 5, 8) of the computer network, wherein the system is configured to decouple the third network nodes (2, 5, 8) from the computer network (100).

10. System according to claim 9, wherein the distributed data structure is a distributed hash table (DHT), wherein a plurality of key-value pairs of the distributed hash table (DHT) are preferably distributed over the computer network (100).

11. System according to claim 10, wherein the system is configured to generate the backup copy of the distributed data structure from the backup information stored on the third network nodes (2, 5, 8).

12. Program comprising a computer readable program code which, when executed on a computer or on a system according to one of claims 9 to 11, causes the computer or the system to perform a method according one of claims 1 to 8.

13. Computer program product for using a computer or a system according to one of claims 9 to 11, the computer program product comprising a computer program stored on a storage medium, the computer program comprising program code which, when executed on a computer or on the system, causes the computer or the system to perform a method according one of claims 1 to 8.
